Europäisches Patentamt

**European Patent Office**

Office européen des brevets

(11) Numéro de publication: **0 048 672**
**B1**

# FASCICULE DE BREVET EUROPEEN

(45) Date de publication du fascicule du brevet:
**18.07.84**

(21) Numéro de dépôt: **81401454.4**

(22) Date de dépôt: **18.09.81**

(51) Int. Cl.³: **G 21 C 1/02**

(54) **Réacteur nucléaire à échangeurs de chaleur intégrés.**

(30) Priorité: **19.09.80  FR 8020180**

(43) Date de publication de la demande:
**31.03.82 Bulletin 82/13**

(45) Mention de la délivrance du brevet:
**18.07.84 Bulletin 84/29**

(84) Etats contractants désignés:
**DE FR GB IT**

(56) Documents cités:
**DE - A - 2 346 868**
**DE - A - 2 812 056**
**FR - A - 2 099 666**
**FR - A - 2 316 704**
**FR - A - 2 404 897**
**GB - A - 985 463**

**NUCLEAR ENGINEERING INTERNATIONAL, vol. 23, no. 272, 1978, pg. 43-60**

(73) Titulaire: **NOVATOME, 20 Avenue Edouard Herriot, F-92350 Le Plessis Robinson (FR)**

(72) Inventeur: **Presciuttini, Leonardo, 89 rue Houdon, F-92330 Sceaux (FR)**

(74) Mandataire: **Bouget, Lucien et al, CREUSOT-LOIRE 15 rue Pasquier, F-75383 Paris Cedex 08 (FR)**

**Description**

L'invention concerne un réacteur nucléaire à neutrons rapides à échangeurs de chaleur intégrés, refroidi au sodium liquide.

Les réacteurs nucléaires à neutrons rapides refroidis au sodium liquide comportent un coeur constitué par des assemblages combustibles reposant sur un support horizontal disposé à l'intérieur d'une cuve renfermant du sodium liquide constituant le fluide primaire du réacteur dans lequel est plongé l'ensemble des assemblages combustibles. Le sodium liquide venant en contact avec les assemblages ou sodium primaire n'est pas utilisé directement pour la transmission de la chaleur du coeur du réacteur au générateur de vapeur produisant la vapeur alimentant la turbine.

Le sodium primaire, dont la circulation à l'intérieur de la cuve est assurée par des pompes, permet l'échauffement de sodium liquide secondaire à l'intérieur d'échangeurs de chaleur intermédiaires.

Les pompes de mise en circulation du sodium primaire et les échangeurs intermédiaires sont disposés à l'intérieur de la cuve du réacteur et sont donc plongés, tout comme le coeur de celui-ci, dans le sodium primaire remplissant la cuve.

Le sodium liquide secondaire circule en circuit fermé entre les échangeurs intermédiaires et les générateurs de vapeur où la chaleur transportée par ce sodium liquide secondaire permet la vaporisation d'eau d'alimentation et la production de la vapeur utilisée par la turbine.

La cuve du réacteur est fermée à sa partie supérieure par une dalle horizontale de grande épaisseur dans laquelle sont ménagées des ouvertures pour le passage des composants du réacteur et des dispositifs de mesure associés à celui-ci qui sont généralement de forme allongée et disposés verticalement. La partie inférieure de ces composants ou dispositifs de mesure pénètre à l'intérieur de la cuve grâce à des ouvertures prévues dans la dalle, cependant que la partie supérieure des composants ou des dispositifs de mesure repose sur la dalle à l'extérieur de la cuve, ce qui assure le maintien de ces composants ou dispositifs de mesure.

Un dispositif d'étanchéité disposé entre le composant et la dalle permet de réaliser une fermeture étanche des ouvertures de la dalle.

En particulier, les pompes primaires et les échangeurs de chaleur intermédiaires sont disposés de cette manière au niveau d'ouvertures prévues dans la dalle.

D'autre part, une ouverture de grande dimension est prévue à la partie centrale de la dalle à la verticale du coeur du réacteur. Cette ouverture est destinée à recevoir un ensemble permettant la commande du réacteur par déplacement de barres absorbant les neutrons dans le coeur et un dispositif de manutention des assemblages combustibles pour réaliser les opérations de chargement et de déchargement du coeur du réacteur.

L'ensemble de commande et le dispositif de manutention sont portés par une plateforme horizontale mobile en rotation autour d'un axe vertical, appelée grand bouchon tournant, fermant l'ouverture ménagée dans la dalle du réacteur.

L'ensemble de commande et le dispositif de manutention des assemblages sont montés sur une plateforme circulaire appelée petit bouchon tournant, de dimensions plus faibles que le grand bouchon tournant et montée rotative sur le grand bouchon tournant autour d'un axe vertical différent de l'axe de rotation de celui-ci.

Le grand bouchon tournant a un diamètre supérieur au diamètre du cylindre d'axe vertical englobant l'ensemble du coeur.

Les composants devant rester fixes lors du mouvement du grand bouchon tournant disposé à la partie centrale de la dalle doivent donc être disposés sur la dalle dans la zone de celle-ci se trouvant à la périphérie du grand bouchon tournant.

C'est le cas par exemple des pompes primaires et des échangeurs intermédiaires qu'on doit disposer tout autour du grand bouchon tournant et en appui sur la zone périphérique de la dalle.

Cette disposition des échangeurs de chaleur intermédiaires qui sont au nombre de 8 dans le cas d'un réacteur nucléaire à neutrons rapides de puissance 1200 MW tel que Super Phenix qui est actuellement en construction, demande de prévoir une dalle et une cuve de grand diamètre pour permettre la disposition de composants de poids important qui sont en appui sur la dalle à la partie périphérique de celle-ci.

La cuve du réacteur est donc d'un diamètre très supérieur au diamètre du coeur, généralement de l'ordre de trois fois le diamètre du coeur.

La cuve contenant le sodium liquide dans lequel baigne le coeur du réacteur et les principaux composants de celui-ci est d'autre part entourée par une cuve de sécurité qui augmente encore l'encombrement de l'ensemble cuve. Un tel réacteur nucléaire à neutrons rapides à échangeurs de chaleur intégrés refroidi au sodium liquide est décrit dans l'article publié dans la revue »Nuclear Engineering International« vol 23, no 272, juin 1978, pages 43—60 »Construction of the world's first full scale fast breeder reactor«. Pour réduire le coût de construction du réacteur nucléaire et pour réduire la quantité de sodium liquide primaire remplissant cette cuve, il est donc souhaitable de diminuer le diamètre de la cuve.

Le but de l'invention est donc de proposer un réacteur nucléaire à neutrons rapides à échangeurs de chaleur intégrés comportant, dans une cuve renfermant du sodium liquide constituant le fluide primaire dans lequel est plongé le coeur du réacteur formé par des assemblages combustibles reposant sur un support horizontal en appui sur la partie inférieure de la cuve, au moins deux échangeurs de chaleur intermédiaires disposés verticalement, permettant l'échauffement de sodium liquide secondaire par le sodium liquide contenu dans la cuve, ou sodium primaire, de forme générale cylindrique et allongée et reliés chacun à un circuit de transport du sodium secondaire entre l'échangeur intermédiaire et un générateur de vapeur pour la production de vapeur d'eau grâce à la chaleur transportée par le sodium secondaire, la cuve du réacteur étant fermée par une dalle horizontale dans laquelle sont ménagées des ouvertures dont l'une, de grandes dimensions et disposée au-dessus du coeur, est équipée d'une plateforme montée rotative autour d'un axe vertical, appelée grand bouchon tournant, portant l'ensemble de commande du réacteur nucléaire et un dispositif de manutention des assemblages combustibles, les échangeurs intermédiaires entièrement contenus dans la cuve étant reliés au circuit de sodium secondaire par des canalisations traversant la dalle du réacteur, ce réacteur nucléaire devant comporter une cuve de diamètre réduit, tout en permettant un accès facile aux échangeurs intermédiaires depuis la dalle du réacteur pour leur entretien ou pour leur démontage.

Dans ce but le réacteur nucléaire est caractérisé par le fait:

— que les échangeurs intermédiaires reposent par leur partie inférieure sur le support du coeur, à la périphérie de celui-ci,
— et que le grand bouchon tournant comporte une ouverture d'une dimension comparable aux dimensions de la section transversale des échangeurs intermédiaires, placée à une distance de l'axe de rotation du bouchon tournant permettant d'amener cette ouverture à la verticale de chacun des échangeurs de chaleur successivement, par rotation du bouchon.

Afin de bien faire comprendre l'invention, on va maintenant décrire à titre d'exemple non limitatif, en se reportant aux figures jointes en annexe, un mode de réalisation d'un réacteur nucléaire suivant l'invention, ce réacteur étant un réacteur à neutrons rapides d'une puissance de 1200 MW comportant 8 échangeurs intermédiaires intégrés.

La fig. 1 représente une vue en coupe verticale de la cuve du réacteur nucléaire.

La fig. 2 représente une vue en plan de la cuve représentée à la fig. 1, la partie inférieure de la fig. 2 étant constituée par une demi-vue du dessus de la cuve et la partie supérieure de la fig. 2 par une demi-vue en coupe de la cuve au niveau AA repéré sur la fig. 1.

La fig. 3 représente une vue en perspective d'un échangeur de chaleur intermédiaire disposé à l'intérieur de la cuve du réacteur nucléaire.

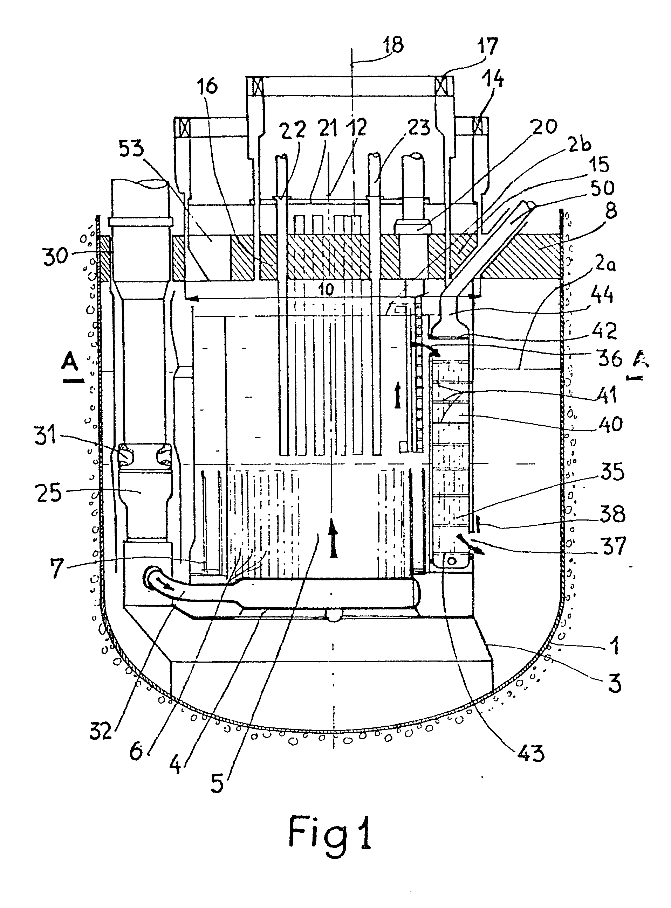

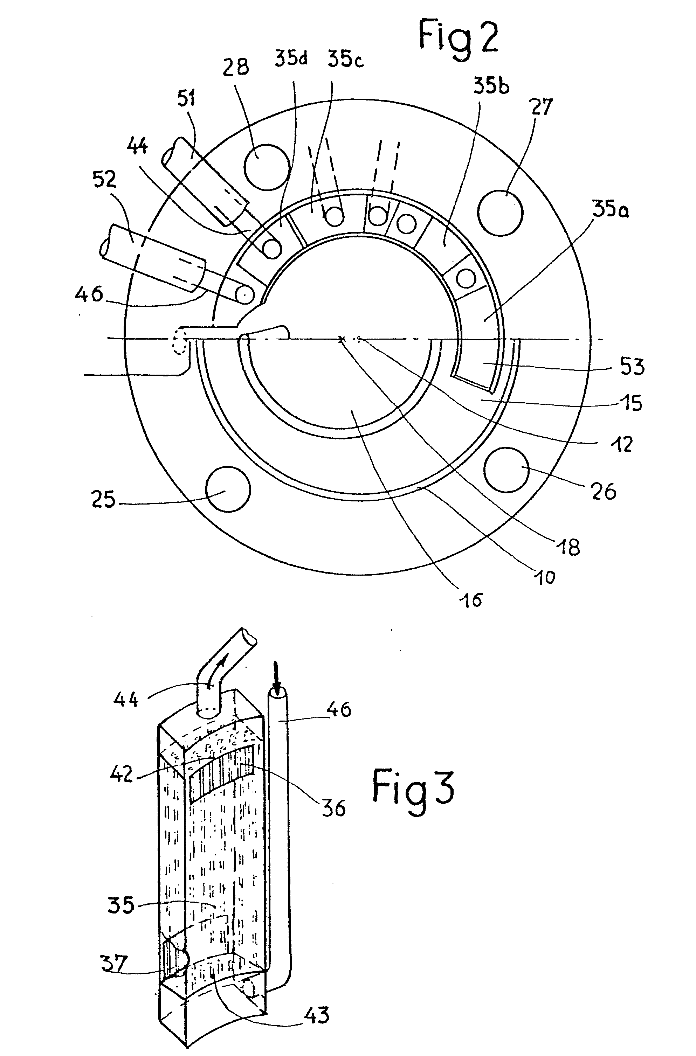

Sur la fig. 1, on voit la cuve principale 1 du réacteur remplie de sodium liquide jusqu'au niveau 2a en partie périphérique et 2b en partie centrale, à l'intérieur du cylindre constituant la cuve interne.

Une structure 3 repose sur la partie inférieure de la cuve et porte un sommier 4 constituant le support du coeur du réacteur. Le coeur du réacteur est constitué par des assemblages combustibles 6 et entouré par des barreaux verticaux 7 constituant la protection neutronique latérale du réacteur, l'ensemble reposant sur le sommier 4.

A sa partie supérieure la cuve 1 est fermée par une dalle 8 de grande épaisseur comportant à sa partie centrale une ouverture 10 de grande dimension.

A l'intérieur de l'ouverture 10 est montée rotative autour d'un axe vertical 12 grâce à un palier annulaire horizontal 14, une plateforme 15 constituant le grand bouchon tournant.

Le grand bouchon tournant a une section circulaire, ainsi qu'il est représenté à la partie inférieure de la fig. 2 et présente une forme tronconique d'axe 12.

Sur le grand bouchon tournant 15 est monté un petit bouchon tournant cylindrique à section circulaire 16 mobile en rotation autour d'un axe 18 sur le grand bouchon tournant 15, grâce à un palier annulaire horizontal 17.

Le petit bouchon tournant 16 porte un dispositif de manutention des assemblages combustibles 20 et le bouchon couvercle coeur 21 du réacteur portant des mécanismes tels que 22 et 23 permettant le déplacement des barres de commande du réacteur.

Les mouvements de rotation du grand bouchon tournant 15 et du petit bouchon tournant 16 autour des axes 12 et 18 respectivement permettent de placer le dispositif de manutention 20 en toute position permettant la manutention d'un assemblage combustible quelconque disposé à l'intérieur du coeur. Sur la partie annulaire périphérique de la dalle 8 disposée autour de l'ouverture circulaire centrale 10, sont disposées, comme dans la technique antérieure, des pompes primaires telles que 25 représentées à la fig. 1.

Quatre pompes primaires 25, 26, 27 et 28 dont les positions sont visibles sur la fig. 2 sont ainsi disposées à la périphérie de la dalle 8 de façon que leurs parties supérieures en appui sur la dalle 8 soient saillantes par rapport à celles-ci et que leurs parties inférieures pénètrent par des trous tels que 30 ménagés dans la dalle, à l'intérieur de la cuve 1 remplie de sodium liquide.

On va décrire le montage et le fonctionnement de la pompe primaire 25 en se référant à la fig. 1, les autres pompes 26, 27 et 28 étant disposées de manière identique à la pompe 25.

Une conduite 32 est reliée à la partie inférieure de la pompe, par laquelle est refoulé le sodium liquide entrant dans le corps de pompe par des ouvertures 31.

La conduite 32 débouche à l'intérieur de la structure du sommier 4 supportant le coeur 5 du réacteur.

Une circulation est ainsi imposée au sodium liquide constituant le fluide primaire récupérant les calories dégagées par le coeur 5 du réacteur. Le sodium liquide refoulé par la pompe 25 à la base du coeur 5 du réacteur vient en contact avec les assemblages combustibles 6 et traverse verticalement, de bas en haut, le coeur 5 tout en s'échauffant. Le sodium liquide primaire chaud débouchant à la partie supérieure du coeur pénètre alors dans les échangeurs intermédiaires pour échauffer le sodium secondaire.

Sur la fig. 1, on voit un échangeur intermédiaire 35 dont le corps est constitué par une portion de cylindre dont la section est visible à la fig. 2. Cet échangeur 35 a également été représenté en perspective à la fig. 3. Il comporte une enveloppe externe ayant deux faces cylindriques de même axe et deux faces planes passant par cet axe. Pour l'ensemble du réacteur, il existe huit échangeurs de chaleur intermédiaires, quatre d'entre eux 35ᵃ, 35ᵇ, 35ᶜ et 35ᵈ ayant été représentés sur la partie supérieure de la fig. 2.

Les échangeurs de chaleur intermédiaires tels que l'échangeur 35 reposent par leurs parties inférieures sur le sommier 4 supportant le coeur et sont disposés à la périphérie du coeur du réacteur dans un espace en forme de portion de cylindre entourant le coeur du réacteur et l'ensemble de commande porté par le bouchon couvercle coeur 21. La section de ces échangeurs intermédiaires en forme de portion de couronne s'adapte donc parfaitement à un remplissage le plus efficace possible de cet espace en forme de portion de cylindre. Chaque échangeur comporte deux surfaces cylindriques de même axe 12, l'une dirigée vers le coeur du réacteur et l'autre vers la paroi interne de la cuve 1 et deux surfaces planes passant par l'axe 12.

Ainsi qu'il est visible aux fig. 1 et 3, l'échangeur 35 comporte à sa partie supérieure une ouverture 36 dirigée vers le coeur du réacteur permettant l'entrée du sodium liquide primaire réchauffé venant du coeur.

L'échangeur 35 comporte également une ouverture 37 à sa partie inférieure et dirigée vers la paroi interne de la cuve pour la sortie du sodium primaire. On a représenté la circulation du sodium liquide primaire dans le réacteur par des flèches.

L'ouverture 37 peut être fermée par un obturateur 38.

A l'intérieur du corps de l'échangeur 35 est disposé un faisceau tubulaire 40 dont les tubes de petit diamètre sont maintenus par des plaques entretoises 41, ces tubes constituant le faisceau étant fixés sur des plaques d'extrémité 42 et 43.

Au-dessus de la plaque d'extrémité 42 le corps de l'échangeur est prolongé par une canalisation 44 communiquant avec la zone du corps de l'échangeur où débouche l'ensemble des tubes de petit diamètre constituant le faisceau 40. Une canalisation verticale 46 est de même reliée à la partie inférieure du corps de l'échangeur de chaleur en dessous de la plaque d'extrémité 43, c'est-à-dire dans une zone où débouche l'ensemble des tubes du faisceau.

Les canalisations 44 et 46 sont reliées au circuit de sodium liquide secondaire servant à échauffer et à vaporiser l'eau d'alimentation à l'intérieur du générateur de vapeur.

Le sodium secondaire lors de sa circulation dans les tubes du faisceau 40 est échauffé par le sodium liquide primaire qui s'écoule en contact avec la paroi externe des tubes du faisceau 40.

La canalisation 44 est reliée à une conduite 50 traversant la dalle 8 du réacteur dans sa partie périphérique à l'extérieur de l'ouverture 10 à l'intérieur de laquelle est disposé le grand bouchon tournant 15.

De la même façon, la conduite 46 traverse la dalle 8 dans sa zone périphérique. Les échangeurs intermédiaires tels que 35 sont donc disposés entièrement à l'intérieur de la cuve 1 sous le niveau de sodium liquide 2b, les canalisations du circuit de sodium liquide traversant la dalle 8.

A l'extérieur de la cuve, les canalisations du circuit de sodium liquide secondaire 44 et 46 passent à l'intérieur de conduits de cabrifugeage de grand diamètre 51 et 52.

Par ailleurs, le grand bouchon tournant 15 est percé d'une ouverture 53 sur toute son épaisseur, cette ouverture 53 ainsi qu'il est visible à la fig. 2, ayant la forme de la section transversale des échangeurs intermédiaires et une dimension un peu supérieure à la dimension de cette section transversale.

L'ouverture 53 est située d'autre part à une distance de l'axe 12 du grand bouchon tournant permettant de venir placer cette ouverture 53 au dessus de chacun des échangeurs intermédiaires 35ᵃ, 35ᵇ, 35ᶜ et 35ᵈ successivement de façon à pouvoir accéder à ces échangeurs.

Grâce à l'ouverture 53, après démontage des canalisations telles que 50 permettant de joindre les canalisations 44—46 au circuit de sodium secondaire, il est possible de sortir l'échangeur de la cuve du réacteur en introduisant par l'ouverture 53 un moyen de levage.

On peut venir fixer une plaque de fermeture ou une hotte au-dessus de l'ouverture 53, lorsque celle-ci n'est pas en service, pour assurer la fermeture de la cuve.

Un des principaux avantages de l'invention est de permettre une réduction de diamètre de la cuve puisque la partie périphérique de la dalle à l'extérieur du grand bouchon tournant ne porte que les pompes primaires comme élément de poids important et qu'on peut donc réduire la dimension de la dalle. En effet, lorsque les échangeurs intermédiaires par exemple au nombre de 8 dans le cas d'un réacteur nucléaire d'une puissance de 1200 MW, sont disposés sur la périphérie de la cuve entre les pompes primaires, il faut prévoir un espacement suffisant de ces divers composants de poids importants pour des questions de résistance de la dalle et pour des questions d'encombrement à l'intérieur de la cuve.

Le fait de prévoir des corps d'échangeurs ayant la forme de portions de cylindre permet de limiter le diamètre de la cuve de façon encore plus importante que si l'on utilise des échangeurs intermédiaires de forme cylindrique à section circulaire disposés autour du coeur et sur le support de celui-ci.

Une réduction du diamètre de la cuve de quelques mètres est possible pour une cuve ordinairement d'un diamètre voisin de 20 m.

Une diminution de cet ordre de la dimension de la cuve permet de réaliser des économies lors de la construction de la cuve, de la dalle et du bâtiment du réacteur.

D'autre part, cette réduction de dimensions permet également de diminuer la masse du sodium liquide primaire nécessaire dans la cuve du réacteur.

Mais l'invention ne se limite pas au mode de réalisation qui vient d'être décrit. C'est ainsi que l'on a décrit des échangeurs intermediaires ayant des sections en portions de cylindre permettant d'atteindre une grande compacité dans la disposition des éléments à l'intérieur de la cuve mais qu'il est également possible d'utiliser des échangeurs intermédiaires plus classiques de forme cylindrique à section circulaire.

On a vu également que la disposition des échangeurs intermédiaires à la périphérie du coeur du réacteur sur le support de celui-ci permettait d'avoir une circulation du sodium primaire particulièrement simple et rationnelle à l'intérieur de chacun des échangeurs. On arrive ainsi à une grande simplification dans la conception et le fonctionnement de l'échangeur intermédiaire par rapport aux échangeurs de la technique antérieure. Mais il est également possible d'utiliser des échangeurs plus classiques où la circulation du sodium liquide à l'intérieur de l'échangeur se fait entre deux ouvertures en communication avec l'espace interne de la cuve, disposées du côté de l'échangeur dirigé vers le coeur.

Le fonctionnement d'un tel dispositif est cependant moins satisfaisant car l'échauffement du sodium secondaire est variable suivant la position des tubes dans le faisceau de l'échangeur intermédiaire.

Les canalisations reliant les échangeurs intermédiaires au circuit de sodium secondaire peuvent être fixées sur ces échangeurs au niveau de leur conduite d'entrée ou de sortie de sodium secondaire, par soudage ou par une liaison mécanique démontable telle qu'une liaison comportant des éléments vissés.

L'invention s'applique d'autre part à tout réacteur nucléaire refroidi au sodium liquide comportant des échangeurs intermédiaires disposés dans la cuve du réacteur, quel que soit le nombre de ces échangeurs et quel que soit le nombre de pompes de circulation du fluide primaire à l'intérieur de la cuve.

**Revendications**

1. Réacteur nucléaire à neutrons rapides à échangeurs de chaleur intégrés comportant, dans une cuve (1) renfermant du sodium liquide constituant le fluide primaire dans lequel est plongé le coeur (5) du réacteur formé par des assemblages (6) combustibles reposant sur un support horizontal (3—4) en appui sur la partie inférieure de la cuve (1), au moins deux échangeurs de chaleur intermédiaires (35) disposés verticalement permettant l'échauffement de sodium liquide secondaire par le sodium liquide contenu dans la cuve (1), ou sodium primaire, de forme générale allongée et reliés chacun à un circuit de transport du sodium secondaire entre l'échangeur intermédiaire et un générateur de vapeur pour la production de vapeur d'eau grâce à la chaleur transportée par le sodium secondaire, la cuve (1) du réacteur étant fermée par une dalle horizontale (8) dans laquelle sont ménagées des ouvertures dont l'une (10) de grande dimension et disposée au-dessus du coeur (5), est équipée d'une plateforme (15) montée rotative autour d'un axe vertical, appelé grand bouchon tournant, portant l'ensemble de commande du réacteur et un dispositif de manutention des assemblages combustibles, les échangeurs intermédiaires (35) entièrement contenus dans la cuve (1) étant reliés au circuit de sodium secondaire par des canalisations (50) traversant la dalle du réacteur, caractérisé par le fait:

— que les échangeurs intermédiaires (35) reposent par leur partie inférieure sur le support (3) du coeur (5) à la périphérie de celui-ci,

— et que le grand bouchon tournant (15) comporte une ouverture (53) d'une dimension comparable aux dimensions de la section transversale des échangeurs intermédiaires (35), placée à une distance de l'axe de rotation du bouchon tournant permettant d'amener cette ouverture à la verticale de chacun des échangeurs de chaleur (35), successivement par rotation du bouchon (15).

2. Réacteur nucléaire à neutrons rapides à échangeurs intégrés suivant la revendication 1, caractérisé par le fait que le corps des échangeurs intermédiaires (35) est en forme de portion de cylindre limité par deux surfaces cylindriques ayant un même axe vertical et par deux plans passant par cet axe.

3. Réacteur nucléaire à neutrons rapides à échangeurs de chaleur intégrés suivant la revendication 2, caractérisé par le fait que les échangeurs de chaleur intermédiaires (35) comportent une ouverture (36) pour l'entrée du sodium primaire dans l'échangeur traversant l'une des parois cylindriques de cet échangeur (35) dirigé vers le coeur (5) du réacteur au voisinage de sa partie supérieure et une ouverture (37), pour la sortie du sodium primaire traversant l'autre paroi cylindrique de l'échangeur (35), dirigée vers la paroi interne de la cuve (1), et à la partie inférieure de l'échangeur (35).

4. Réacteur nucléaire à neutrons rapides à échangeurs de chaleur intégrés suivant l'une quelconque des revendications 1, 2 et 3 caractérisé par le fait que les canalisations (50) traversant la dalle (8) et reliant les échangeurs de chaleur (35) au circuit de sodium secondaire sont fixées sur ces échangeurs par une liaison mécanique ou soudée démontable à distance.

**Patentansprüche**

1. Schneller Neutronenreaktor mit eingebauten Wärmetauschern in einem Druckbehälter (1), der als Primärmedium Flüssignatrium enthält, in das der aus Brennelementbündeln (6) bestehende Reaktorkern (5) eingetaucht ist, der auf einer auf dem Unterteil des Druckbehälters (1) sich abstützende Horizontalauflage (3—4) ruht, bestehend aus mindestens zwei zwischengeschalteten, senkrecht angeordneten, allgemein länglich ausgebildeten Wärmetauschern (35) zur Erhitzung des sekundären Flüssignatriums durch das in dem Druckbehälter (1) enthaltene Flüssig- oder Primärnatrium, die jeweils über einen Kreis zum Umlauf des Sekundärnatriums zwischen dem zwischengeschalteten Wärmetauscher und einem Dampfgenerator zur Erzeugung des Wasserdampfes mittels der durch das Sekundärnatrium beförderte Wärme verbunden sind, wobei der Reaktordruckbehälter (1) durch eine horizontale Platte (8) mit darin vorgesehenen Öffnungen verschlossen ist — die eine großdimensionierte über dem Kern (5) angeordnete Öffnung (10) ist mit einer um eine senkrechte Achse drehbar montierte als großer Drehverschluß bezeichnete Plattform (15) ausgerüstet, welche die gesamte Reaktorsteuerung und eine Vorrichtung zur Handhabung der Brennelementbündel aufnimmt — wobei die in dem Druckbehälter (1) vollständig untergebrachten zwischengeschalteten Wärmetauscher (35) über die Reaktorplatte durchquerende Rohrleitungen (50) an dem Sekundärnatrium-Umlaufkreis angeschlossen sind, dadurch gekennzeichnet, daß

—  die zwischengeschalteten Wärmetauscher (35) mit ihrem Unterteil auf der Abstützung (3) des Kerns (5) an dem Umfang desselben aufliegen,
—  und der große Drehverschluß (15) eine im Abstand von der Rotationsachse des Drehverschlusses angeordnete Öffnung (53) mit einer dem Querschnitt der zwischengeschalteten Wärmetauscher (35) vergleichbaren Abmessung aufweist, wodurch diese Öffnung durch Rotieren des Drehverschlusses (15) nacheinander in eine senkrechte Lage über dem jeweiligen Wärmetauscher (35) gebracht werden kann.

2. Schneller Neutronenreaktor mit eingebauten Wärmetauschern nach Anspruch 1, dadurch gekennzeichnet, daß der Körper der zwischengeschalteten Wärmetauscher (35) als Teil eines Zylinders ausgebildet ist, welcher durch zwei dieselbe Senkrechtachse aufweisende Zylinderflächen und durch zwei über diese Achse sich erstreckenden Ebenen begrenzt ist.

3. Schneller Neutronenreaktor mit eingebauten Wärmetauschern nach Anspruch 2, dadurch gekennzeichnet, daß die zwischengeschalteten Wärmetauscher (35) zum Eintritt des Primärnatriums in den Wärmetauscher an seinem Oberteil eine zum Reaktorkern (5) hin gerichtete, eine Zylinderwandung durchquerende Öffnung (36) und zum Austritt des Primärnatriums eine an dem Unterteil des Wärmetauschers (35) zur Innenwand des Druckbehälters (1) hin gerichtete, die andere Wandung des Wärmetauschers (35) durchquerende Öffnung (37) aufweisen.

4. Schneller Neutronenreaktor mit eingebauten Wärmetauschern nach einem der Ansprüche 1, 2 und 3, dadurch gekennzeichnet, daß die die Platte (8) durchquerenden, die Wärmetauscher (35) mit dem Sekundärnatriumkreis verbindenden Rohrleitungen (50) über eine mechanische oder angeschweißte, von der Entfernung abnehmbare Verbindung an diesen Wärmetauschern befestigt sind.

**Claims**

1. A fast-neutron nuclear reactor with integrated heat exchangers, comprising, in a vessel (1) enclosing the liquid sodium forming the primary fluid in which is immersed the reactor core (5) formed by fuel assemblies (6) resting on a horizontal support (3—4) bearing on the lower part of the vessel (1), at least two intermediate heat exchangers (35) arranged vertically, permitting the heating of secondary liquid sodium by the liquid sodium contained in the vessel (1), or primary sodium, of a generally elongate shape and each connected to a circuit for carrying the secondary sodium between the intermediate exchanger and a steam generator for the production of steam by virtue of the heat carried by the secondary sodium, the reactor vessel (1) being closed by a horizontal slab (8) in which are arranged openings one (10) of which, large in size and arranged above the core (5), is equipped with a platform (15) mounted to be capable of rotation around a vertical axis, called the large rotating plug, carrying the reactor control unit and a device for handling the fuel assemblies, the intermediate exchangers (35) which are wholly contained in the vessel (1) being connected to the secondary sodium circuit by pipes (50) passing through the reactor slab, characterized in that:

—  the intermediate exchangers (35) rest with their lower part on the support (3) of the core (5) at the periphery of the latter, and
—  the large rotating plug (15) comprises an opening (53) of a size comparable to the dimensions of the crosssection of the intermediary exchangers (35), placed at a distance from the axis of rotation of the rotating plug permitting this opening to be positioned vertically above each of the heat exchangers (35) in succession by rotating the plug (15).

2. A fast-neutron nuclear reactor with integrated exchangers according to claim 1, characterized in that the body of the intermediate exchangers (35) is in the shape of a part of a cylinder bounded by two cylindrical surfaces having the same vertical axis and by two planes passing through this axis.

3. A fast-neutron nuclear reactor with integrated heat exchangers according to claim 2, characterized in that the intermediate neat exchangers (35) comprise an opening (36) for the entry of the primary sodium into the exchanger, passing through one of the cylindrical walls of this exchanger (35) directed towards the reactor core (5) close to its upper part and an opening (37) for the exit of the primary sodium, passing through the other cylindrical wall of the exchanger (35), directed towards the inner wall of the vessel (1) and in the lower part of the exchanger (35).

4. A fast-neutron nuclear reactor with integrated heat exchangers according to any one of claims 1, 2 and 3, characterized in that the pipes (50) passing through the slab (8) and connecting the heat exchangers (35) to the secondary sodium circuit are fixed to these exchangers by a mechanical or welded joint which can be disassembled at a distance.

Fig 1

Fig 2

Fig 3